# EUROPEAN PATENT SPECIFICATION

(11) **EP 4 369 694 B1**
(45) Date of publication and mention of the grant of the patent: **21.10.2026**
(21) Application number: 22837244.7
(22) Date of filing: 10.03.2022
(51) Int. Cl.: H04W 4/38, H04M 11/00, H04W 4/33, H04W 48/18, H04W 88/06, H04W 12/06, H04M 11/02, H04W 84/12, H04W 84/18

(54) **FIXED TERMINAL DEVICE, CONTROL METHOD, AND CONTROL PROGRAM**
FESTE ENDGERÄTEVORRICHTUNG, STEUERUNGSVERFAHREN UND STEUERUNGSPROGRAMM
DISPOSITIF TERMINAL FIXE, PROCÉDÉ DE COMMANDE ET PROGRAMME DE COMMANDE

(30) Priority: 09.07.2021 JP 2021113981
(43) Date of publication of application: 15.05.2024
(73) Proprietor: KONICA MINOLTA, INC., Tokyo 100-7015 (JP)
(72) Inventor: YAMAGUCHI, Takehisa, Tokyo 100-7015 (JP); MIYAMOTO, Hiroyuki, Tokyo 100-7015 (JP); ASANO, Motohiro, Tokyo 100-7015 (JP)
(74) Representative: MFG Patentanwälte Meyer-Wildhagen Meggle-Freund Gerhard PartG mbB
(86) International application number: PCT/JP2022/010533
(87) International publication number: WO 2023/281822

(56) References cited:
- JP-A- 2006 191 244
- JP-A- 2018 191 165
- JP-A- 2021 010 129
- JP-A- 2021 034 981
- JP-A- 2021 040 276
- JP-A- 2021 087 101
- US-A1- 2004 100 562
- US-A1- 2011 193 718
- US-A1- 2019 281 370

## Description

### Technical Field

The present invention relates to a fixed terminal device, a control method, and a control program.

### Background Art

In recent years, the amount of data transmitted through a wireless communication network has rapidly increased with increasing interest in content such as audio and moving images on the Internet. In the background of the rapid increase in the amount of data in such a wireless communication network, there is progress in technology development regarding a wireless communication system. For example, in carrier communication using a mobile terminal such as a smartphone or a tablet, a technology for switching the communication carrier according to a congestion status or communication quality of a base station or a data amount of content is known (for example, Patent Literature 1 below).

Further, the mobile terminal is a communication device on the premise of movement, and in a case where users concentrate on some communicable areas, traffic in the communicable areas increases, and a sufficient communication speed may not be obtained. In such a case, a wireless communication device that switches connection to another company on the basis of a communication environment (for example, the number of connections of the base station) is known (for example, Patent Literature 2 below).

On the other hand, for example, wireless communication using a private network has been conventionally performed in a limited area such as in one building or on a site. Although the wireless communication of the private network is limited to an area having a narrow communicable area, the amount of transmittable data is large, and a sufficient communication speed is easily obtained. Further, as compared with carrier communication, unauthorized access is less likely to occur in the communicable area, so that security of communication can be maintained in a high state. Therefore, the wireless communication of the private network can be used, for example, in a case where detection data (for example, video or image) is transmitted from a sensor (for example, a monitoring camera) that monitors a facility in a factory in a company to a display device of an administrator in another place, and the like. In particular, in the fifth generation wireless communication system (5G) system, when these pieces of detection data are transmitted, it is possible to take advantage of features such as high-speed large-capacity, ultra-low delay, and multiple simultaneous connection.
United States Patent Application Publication US 2011/193718 A1 provides a system for wireless multi-network meter reading, which includes a data-transfer device, capable of connecting to multiple networks using multiple subscriber identifiers.
United States Patent Application Publication US 2019/0281370 A1 provides a network-based sensing system for monitoring an object.

### Citation List

### Patent Literature

Patent Literature 1: JP 2012-165154 A
Patent Literature 2: JP 2012-186791 A

### Summary of Invention

### Technical Problem

However, in the wireless communication of the private network, when the administrator of the factory, which is a communication destination, is outside the communicable area of the private network due to going out, returning home, or the like, it becomes difficult to transmit the detection data to the administrator. Further, in a case of the private network (local network), it is limited to wireless communication with a communication destination in the communicable area, and in order to wirelessly communicate with the communication destination outside the communicable area, it is necessary to connect to another network via the private network. In such a case, it is necessary to pass through a plurality of processes before being connected to the communication destination, which may lead to a decrease in reliability. In particular, when the 5G method is used, there is a possibility that the advantages of ultra-low delay and high speed cannot be utilized.

The present invention has been made in view of the above-described problems. Therefore, an object of the present invention is to provide a fixed terminal device, a control method, and a control program capable of transmitting detection data even when a communication destination is outside a communicable area of a private network.

### Solution to Problem

According to a first aspect, the present invention provides a terminal device according to independent claim 1. According to a second aspect, the present invention provides a controlling method according to independent claim 11. According to a third aspect, the present invention provides a computer program, in accordance with independent claim 14. Further aspects of the present invention are set forth in the dependent claims.

### Advantageous Effects of Invention

According to the present invention, it is configured to select one of a plurality of different wireless communication networks and to transmit transmission data based on data from a sensor device using the selected wireless communication network. Therefore, even if a communication destination is outside a communicable area of one wireless communication network (for example, a private network), detection data can be transmitted to the communication destination by selecting another wireless communication network (for example, a carrier communication network).

### Brief Description of Drawings

Fig. 1 is a conceptual diagram for describing an outline of a monitoring system in a first embodiment.
Fig. 2 is a schematic diagram illustrating a case where communication is performed using a wireless communication network of a carrier 5G.
Fig. 3 is a schematic block diagram illustrating a hardware configuration of a fixed terminal device illustrated in Fig. 1.
Fig. 4 is a functional block diagram illustrating main functions of a control unit illustrated in Fig. 3.
Fig. 5 is a flowchart illustrating a processing procedure of a control method for the fixed terminal device illustrated in Fig. 1.
Fig. 6A is a schematic diagram illustrating a video of piping equipment captured by a visible light camera of a sensor device.
Fig. 6B is a schematic diagram illustrating a video of gas leakage captured by an infrared camera of the sensor device.
Fig. 7 is a diagram illustrating a SIM used for wireless communication and presence or absence of processing (mosaic processing) on a video of the visible light camera in each time slot.
Fig. 8 is a schematic diagram illustrating a video of the visible light camera subjected to mosaic processing.
Fig. 9 is a schematic diagram illustrating a SIM used for wireless communication, a video size, and a frame rate in each time slot.
Fig. 10 is a schematic diagram illustrating a SIM used for wireless communication and notification content according to a confidentiality level.
Fig. 11 is a schematic diagram illustrating a SIM used for wireless communication and notification content according to a sensor to be driven.
Fig. 12 is a flowchart illustrating an outline of a processing procedure of a control method for a fixed terminal device in a second embodiment.
Fig. 13 is a functional block diagram illustrating a main configuration of a control unit in a third embodiment.
Fig. 14 is a flowchart illustrating an outline of a processing procedure of a control method for a fixed terminal device in the third embodiment.
Fig. 15 is a diagram illustrating a method of setting notification contents for an administrator according to a SIM used for wireless communication.
Fig. 16 is a flowchart illustrating the method of setting notification contents for the administrator according to the SIM used for wireless communication.
Fig. 17 is a functional block diagram illustrating a main configuration of a control unit in a fourth embodiment.
Fig. 18 is a flowchart illustrating an outline of a processing procedure of a control method for a fixed terminal device in the fourth embodiment.
Fig. 19 is a functional block diagram illustrating a main configuration of a control unit in a fifth embodiment.
Fig. 20 is a flowchart illustrating an outline of a processing procedure of a control method for a fixed terminal device in the fifth embodiment.

### Description of Embodiments

Hereinafter, embodiments of the present invention will be described with reference to the drawings. Note that, in the drawings, the same elements are denoted by the same reference numerals, and redundant description will be omitted. In addition, dimensional ratios in the drawings are exaggerated for convenience of description, and may be different from actual ratios.

### (First embodiment)

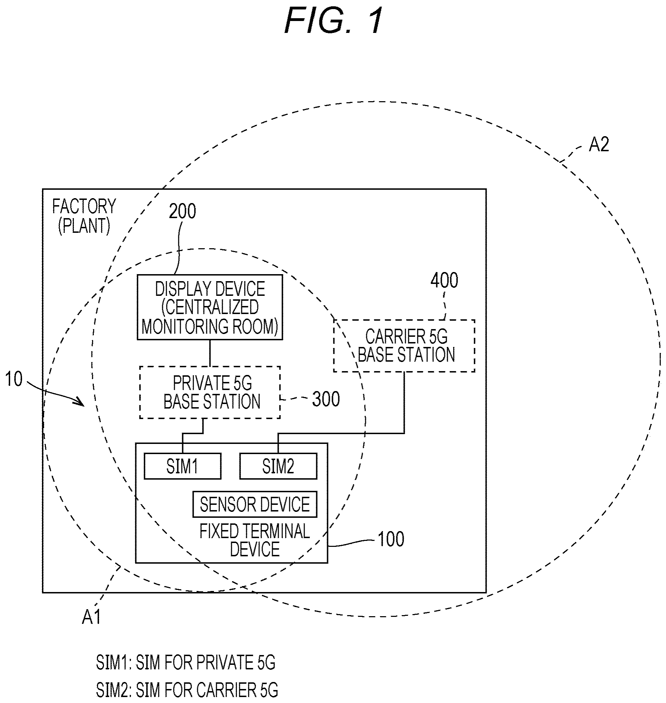

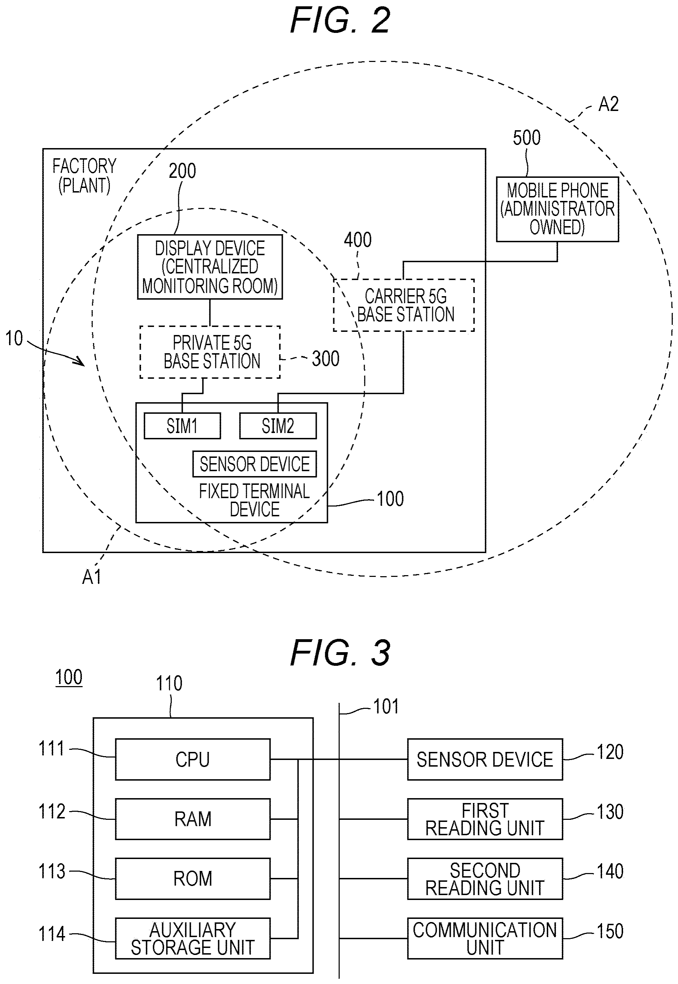

Fig. 1 is a conceptual diagram for describing an outline of a monitoring system 10 in the first embodiment, and Fig. 2 is a schematic diagram illustrating a case where communication is performed using a wireless communication network of a carrier 5G. The carrier 5G is a fifth generation wireless communication system (5G) provided by mobile telecommunications carriers (carriers) all over the country. Note that the carrier 5G wireless communication network will be mainly described below as an example, but it is not limited to the carrier 5G, and may be a carrier communication network or a public wireless line of an existing fourth generation mobile communication system (hereinafter referred to as "4G") or third generation mobile communication system (hereinafter referred to as "3G").

As illustrated in Fig. 1, the monitoring system 10 includes a fixed terminal device 100 and a display device 200, and is a system that monitors an abnormality (for example, gas leakage) in a detection target (for example, piping equipment) in a factory having a large site or a plant. Near the detection target, the fixed terminal device 100 that is a device for detecting an abnormality of the detection target is disposed. Although only one fixed terminal device 100 is illustrated in Fig. 1 in order to simplify the drawing, a plurality of fixed terminal devices can be appropriately arranged according to the scale of the detection target and the detection range of the fixed terminal device 100. As described in detail below, the fixed terminal device 100 of the present embodiment is an edge device that can be used by switching a plurality of subscriber identity modules (SIMs). The fixed terminal device 100 may be, for example, a monitoring camera that monitors the detection target. In this case, the arrangement of the monitoring camera is adjusted such that the detection target is included in the visual field of the monitoring camera.

In the factory, a base station 300 of a private 5G (also referred to as "local 5G") that satisfies 5G regulations (private 5G and carrier 5G are defined by the International Telecommunication Union (ITU) "IMT-2020") is installed. Thus, the fixed terminal device 100 can use a wireless communication network of the private 5G in a communicable area A1.

Unlike the carrier 5G, the private 5G is a wireless communication system (private wireless line) used for communication of a smartphone, a personal computer, a tablet terminal, or the like in a specific area such as a limited living area, an office, a factory, or a plant. In the present embodiment, the fixed terminal device 100 can communicate with the display device 200 installed in a centralized monitoring room located away from the fixed terminal device 100 by the private 5G wireless communication network.

The fixed terminal device 100 transmits notification data and alarm information to the display device 200. As described later, the notification data is video data, audio data, or text data based on detection data obtained by detecting the detection target by a sensor of a sensor device. Further, the alarm information is information for notifying an administrator of the detection target of the abnormality related to the detection target. The display device 200 is, for example, a personal computer, and has a function of receiving and reproducing (displaying) the video data, the audio data, and the text data from the fixed terminal device 100.

Further, in the factory, in addition to the base station 300 of the private 5G, a base station 400 of the carrier 5G is installed. Thus, the fixed terminal device 100 can use the carrier 5G wireless communication network in a communicable area A2. For example, the communicable areas A1 and A2 partially overlap and entirely have different sizes (A1 < A2). The fixed terminal device 100 can communicate with a communication destination outside the communicable area A1 of the private 5G wireless communication network by the carrier 5G wireless communication network. Note that the communicable areas A1 and A2 have different sizes, but do not necessarily have overlapping areas. As described above, the fixed terminal device 100 can be used in a communicable range with both the private 5G wireless communication network and the carrier 5G wireless communication network.

As illustrated in Fig. 2, the communication destination of the fixed terminal device 100 may be, for example, a mobile phone 500 of the administrator who manages the detection target. The carrier 5G wireless communication network is compliant with the same communication standard as the private 5G wireless communication network. The private 5G and carrier 5G are wireless communication networks that satisfy the regulations "IMT-2020" defined by the International Telecommunication Union (ITU).

In the present embodiment, the fixed terminal device 100 selects a SIM card (hereinafter also simply referred to as "SIM") to transmit the notification data by using one of the wireless communication networks of the private 5G and the carrier 5G. In the SIM card for the private 5G, a subscriber identification number for identifying a subscriber in a specific area, an encrypted authentication key, and the like are recorded as authentication information (first authentication information).

Further, in the SIM card for the carrier 5G, an International Mobile Subscriber Identity (IMSI), an encrypted authentication key, company specifying information for specifying a communication carrier, and the like are recorded as authentication information (second authentication information).

In the example illustrated in Fig. 1 and Fig. 2, when a SIM 1 is selected, the private 5G wireless communication network is used, and when a SIM 2 is selected, the carrier 5G wireless communication network is used.

In the private 5G wireless communication network, connection statuses of a plurality of terminal devices including the fixed terminal device 100 is managed in the base station 300, and is operated in the limited communicable area A1 by using the SIM 1 different from the SIM 2 of the carrier 5G. Therefore, it is less susceptible to external noise, a "hard to connect" state and deterioration of communication quality are avoided, and thus stability and confidentiality of communication are improved. Further, compared with the carrier 5G, the amount of data transmission information and the number of simultaneous connections can be increased, and there is also an advantage of a low delay. In addition, when the wireless communication network is designed, the wireless communication network can be customized in consideration of upward and downward restrictions on the communication speed.

On the other hand, in the carrier 5G wireless communication network, there is an advantage that the density and the coverage area of the base station are wide, and there is almost no restriction on the communicable area. Further, a telephone call is easily connected and call quality is stable. That is, the reach distance of a call is long, and immediacy is high. Note that, for a call, even if a resource of a device is downgraded from 4G to 3G, a voice call is preferentially connected. Further, in a case of the voice-compatible SIM, an internet protocol (IP) address by an individual telephone number is included. A data SIM is mainly for services, download is prioritized, and the reception base station is connected to a public wireless line including a network prepared by a telecommunications carrier, so that security or the like is hardly ensured.

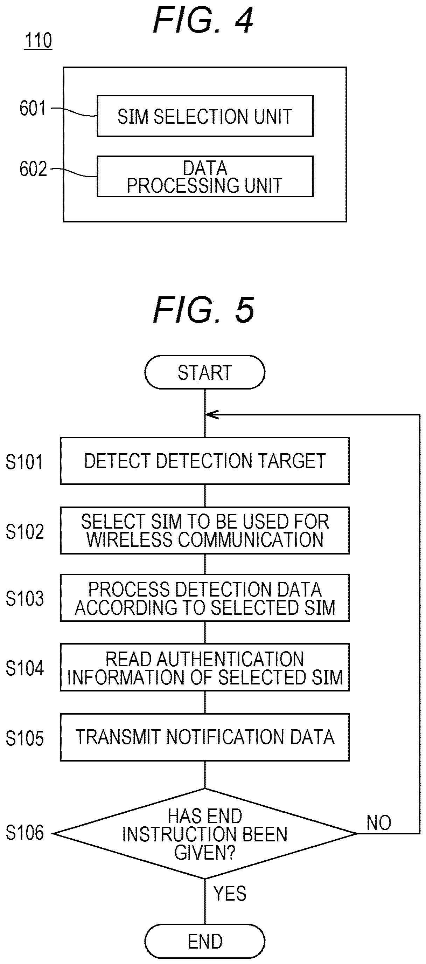

Fig. 3 is a schematic block diagram illustrating a hardware configuration of the fixed terminal device 100 illustrated in Fig. 1, and Fig. 4 is a functional block diagram illustrating main functions of a control unit 110 illustrated in Fig. 2.

As illustrated in Fig. 3, the fixed terminal device 100 includes the control unit 110, a sensor device 120, a first reading unit 130, a second reading unit 140, and a communication unit 150. These components are communicably connected to each other by an internal bus 101.

The control unit 110 is a computer, and includes a central processing unit (CPU) 111, a random access memory (RAM) 112, a read only memory (ROM) 113, and an auxiliary storage unit 114.

The CPU 111 executes programs such as an operating system (OS) and a control program developed in the RAM 112 to control the operation of the fixed terminal device 100. The control program is stored in advance in the ROM 113 or the auxiliary storage unit 114. Further, the RAM 112 stores data and the like temporarily generated by the processing of the CPU 111. The ROM 113 stores programs executed by the CPU 111, data used for executing the programs, parameters, and the like. The auxiliary storage unit 114 includes, for example, a hard disk drive (HDD), a solid state drive (SSD), and the like.

The sensor device 120 detects the detection target and outputs detection data. In the present embodiment, the sensor device 120 includes a visible light camera and an infrared camera (a plurality of sensors), and captures an image of piping equipment as the detection target. The infrared camera is sensitive to a particular gas having a predetermined absorption wavelength, for example, supplied by factory piping equipment. The video data from the visible light camera and the infrared camera is transmitted to the control unit 110 (a data processing unit 602 in Fig. 4) as detection data. In addition to the visible light camera and the infrared camera, the sensor device 120 can also include, for example, a microphone, a thermometer, a hygrometer, a barometer, and the like.

The first reading unit 130 reads the first authentication information for connecting to the private 5G wireless communication network (first wireless communication network). The first authentication information is recorded in the SIM 1.

Further, the second reading unit 140 reads the second authentication information for connecting to the carrier 5G wireless communication network (second wireless communication network). The second authentication information is recorded in the SIM 2.

The communication unit 150 performs communication with the base station 300 by using the first authentication information, or performs communication with the base station 400 by using the second authentication information. The communication unit 150 includes a reception unit that receives a radio signal transmitted from each of the base stations 300 and 400 and a transmission unit that transmits notification data to each of the base stations 300 and 400, and performs communication corresponding to the service of the private 5G or the carrier 5G. The communication unit 150 can perform communication according to, for example, the Code Division Multiple Access (CDMA) or the Orthogonal Frequency Division Multiple Access (OFDMA).

As illustrated in Fig. 4, the control unit 110 functions as a SIM selection unit 601 and a data processing unit 602. The functions of the SIM selection unit 601 and the data processing unit 602 are implemented by the CPU 111 executing the control program.

The SIM selection unit 601 selects the SIM to be used for wireless communication. Thus, one of the wireless communication networks of the private 5G and the carrier 5G is selected. A specific manner of selecting the SIM is described below.

The data processing unit 602 processes the detection data output from the sensor device 120 according to the SIM used for wireless communication. More specifically, when the SIM 2 (carrier 5G wireless communication network) is selected by the SIM selection unit 601, the data processing unit 602 processes the video data output from the sensor device 120, generates the notification data, and outputs the notification data to the communication unit 150. On the other hand, when the SIM 1 (private 5G wireless communication network) is selected by the SIM selection unit 601, the data processing unit 602 outputs the video data as it is to the communication unit 150 as the notification data without processing the video data.

The data processing unit 602 can perform, for example, encryption processing or mosaic processing on video data. Further, the data processing unit 602 can convert the video data into audio data or text data by generating audio information or text information on the basis of the video data. The audio information is information obtained by converting various types of information related to video of the detection target into audio. Furthermore, the text information is information obtained by converting various types of information regarding the video of the detection target into text (documentation). For example, the audio information and the text information may include various types of information necessary for the administrator to deal with when the abnormality occurs in the detection target, for example, the type of the abnormality, the occurrence time, information related to the area where the abnormality occurs, information related to the monitoring camera (fixed terminal device 100) that has captured the abnormality, information related to the capturing angle of the monitoring camera, and the like. The type of abnormality can be estimated by, for example, pattern recognition technology, machine learning, or the like on the basis of videos of a plurality of infrared cameras captured in the past. The processed data is output to the communication unit 150 as notification data.

### (Control Method of Fixed Terminal Device 100)

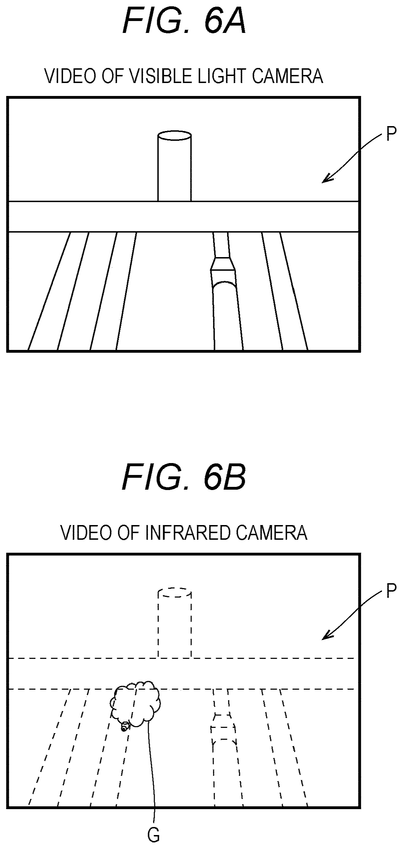

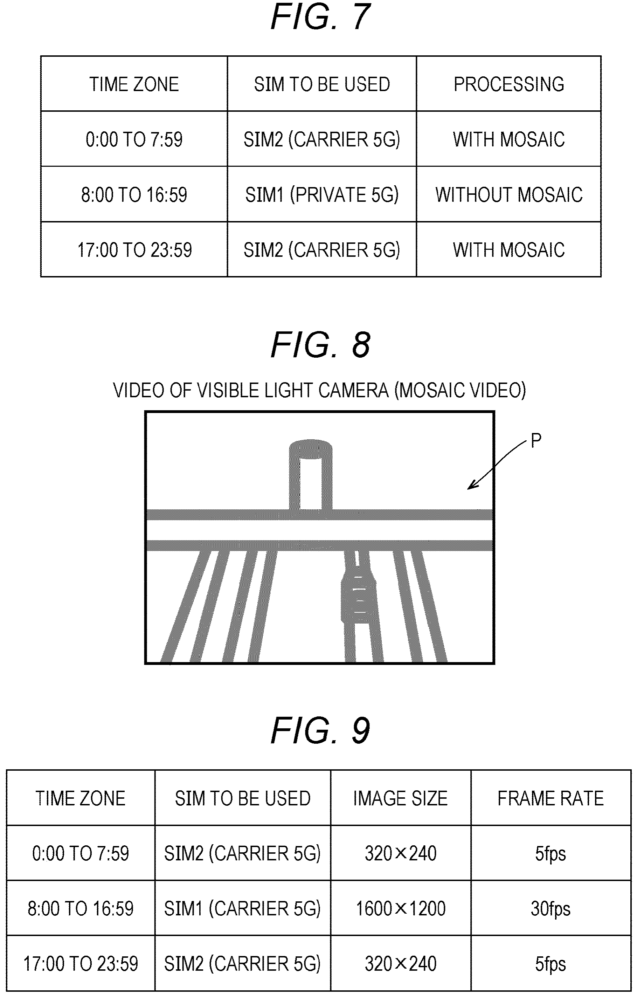

Fig. 5 is a flowchart illustrating a processing procedure of a control method for the fixed terminal device 100 illustrated in Fig. 1. Each processing of the flowchart illustrated in the drawing is implemented by the CPU 111 executing the control program. Fig. 6A is a schematic diagram illustrating a video of the piping equipment captured by the visible light camera of the sensor device 120, and Fig. 6B is a schematic diagram illustrating a video of gas leakage captured by the infrared camera of the sensor device 120. Further, Fig. 7 is a diagram illustrating the SIM used for wireless communication and the presence or absence of processing (mosaic processing) on the video of the visible light camera in each time slot, and Fig. 8 is a schematic diagram illustrating the video of the visible light camera subjected to the mosaic processing. Furthermore, Fig. 9 is a schematic diagram illustrating a SIM used for wireless communication, a video size, and a frame rate in each time slot.

As illustrated in Fig. 5, first, the detection target is detected (step S101). As illustrated in Figs. 6A and 6B, for example, the control unit 110 controls the sensor device 120 so that a piping equipment P as the detection target is imaged by the visible light camera and the infrared camera. The visible light camera and the infrared camera continuously capture a video of the piping equipment P at all times, and output the captured video data to the data processing unit 602. Note that, in Fig. 6B, a gas leakage G is depicted by a solid line, and the piping equipment P is depicted by a broken line.

Next, the SIM to be used for wireless communication is selected (step S102). The SIM selection unit 601 selects one of the SIM 1 and the SIM 2 to be used for wireless communication to select which of the wireless communication networks of the private 5G and the carrier 5G is used to perform wireless communication.

As illustrated in Fig. 7, in the present embodiment, the SIM selection unit 601 selects the SIM to be used for wireless communication according to the current time (time information). More specifically, the SIM selection unit 601 selects the SIM according to whether or not the current time is within a range of a preset time slot. For example, in a case where the current time is within the range of the time slot of 0: 00 to 7: 59, it is outside the working hours of the administrator who manages the piping equipment P (hereinafter simply referred to as "administrator"), and thus the SIM 2 (the carrier 5G wireless communication network) is selected. Further, in a case where the current time is within the range of the time slot of 8:00 to 16:59, it is within the working hours of the administrator, and thus the SIM 1 (the private 5G wireless communication network) is selected. Furthermore, in a case where the current time is within the range of the time slot of 17:00 to 23:59, it is outside the working hours of the administrator, and thus the SIM selection unit 601 selects the SIM 2.

Next, the detection data is processed according to the selected SIM (step S103). When the SIM 2 is selected, the data processing unit 602 processes the video data so that details of the equipment in the factory are unknown in order to avoid leakage of a highly confidential video of the equipment in the factory to the outside, and outputs the processed video data to the communication unit 150.

For example, as illustrated in Fig. 8, the data processing unit 602 performs processing (for example, mosaic processing) on the video data to such an extent that the location of the gas leakage can be specified. In addition to the mosaic, as illustrated in Fig. 9, the data processing unit 602 can also be configured to change the size of the video of each frame of the video data and the frame rate according to the selected SIM. For example, when the SIM 2 is selected, the size of the video can be made smaller or the frame rate can be made lower than when the SIM 1 is selected. Therefore, when the SIM 2 is selected, the information amount of the notification data is reduced as compared with a case where the SIM 1 is selected.

On the other hand, when the SIM 1 is selected, the data processing unit 602 outputs the video data to the communication unit 150 without processing the video data. This is because the video data is transmitted to the display device 200 in the centralized monitoring room in the factory using the private 5G.

Next, the authentication information of the selected SIM is read (step S104). When the SIM 1 is selected, the first reading unit 130 reads the first authentication information for connecting to the private 5G wireless communication network. On the other hand, when the SIM 2 is selected, the second reading unit 140 reads the second authentication information for connecting to the carrier 5G wireless communication network.

Next, the notification data is transmitted (step S105). The communication unit 150 connects to the wireless communication network by using the first authentication information or the second authentication information, and transmits the notification data.

That is, the during the time in which the administrator works in the factory (in the communicable area A1), it is connected by the private 5G wireless communication network, and the notification data is transmitted to the display device 200 in a centralized management room. On the other hand, during the time slot in which the administrator is absent, it is connected by the carrier 5G wireless communication network, and the notification data is transmitted to the mobile phone 500 of the administrator outside the factory (outside the communicable area A1).

The administrator checks the video displayed on the screen of the display device 200 or the mobile phone 500, and determines whether or not the piping equipment P is abnormal.

Next, referring back to Fig. 5, it is determined whether or not an end instruction has been given has been given (step S106). In a case where an end instruction has been given (step S106: YES), the process is ended (end). In a case where no end instruction has been given (step S106: NO), the process proceeds to step S101. The end instruction is an instruction by the administrator to end (interrupt) the monitoring of the detection target with respect to the fixed terminal device 100, for example, in a case where the administrator grasps the abnormality of the piping equipment P and determines that it is not necessary to perform the monitoring any more, or in a case where the administrator has finished issuing the instruction of handling to the worker in the site in the factory, or the like.

As described above, in the processing of the flowchart illustrated in Fig. 5, the fixed terminal device 100 detects the detection target by the sensor device 120, and selects which of a plurality of wireless communication networks (the private 5G and the carrier 5G) is used to transmit the notification data based on the detection data of the sensor device 120. Subsequently, the fixed terminal device 100 reads the authentication information for connecting to the selected wireless communication network, connects to the wireless communication network using the authentication information, and transmits the notification data.

### (Modification)

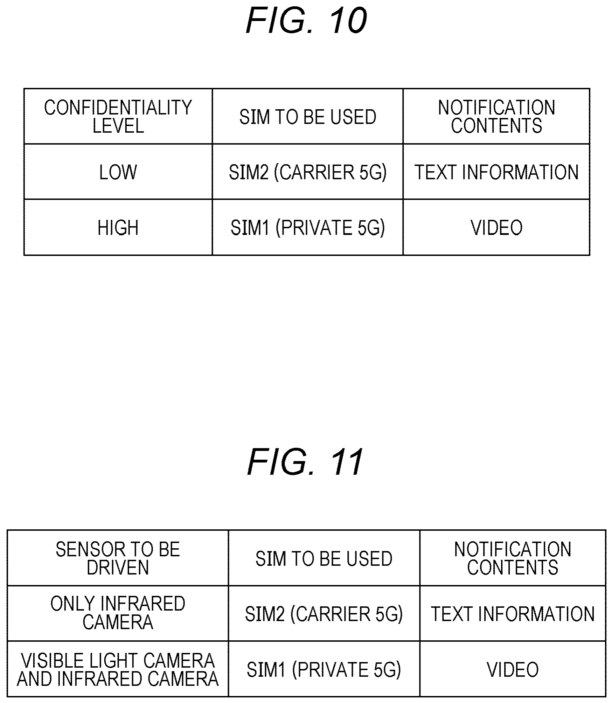

Fig. 10 is a schematic diagram illustrating a SIM used for wireless communication and notification contents according to a confidentiality level, and Fig. 11 is a schematic diagram illustrating a SIM used for wireless communication and notification contents according to a sensor to be driven.

In the above example, a case where the SIM selection unit 601 selects the wireless communication network to transmit the notification data using the current time has been exemplified, but it is not limited to such a case. Instead of the current time, it may be configured to determine whether or not the administrator is in the centralized monitoring room by using the login information of the administrator, and select the wireless communication network to transmit the notification data according to the determination result.

Further, as illustrated in Fig. 10, the SIM selection unit 601 can be configured to select the wireless communication network to transmit the notification data according to the confidentiality level of the detection data. A configuration may be employed in which the confidentiality level is set by the sensor device 120 for each detection data according to the sensor included in the sensor device 120, or specified in advance by the administrator for each sensor. In the example illustrated in the drawing, when the confidentiality level is low, the SIM selection unit 601 selects the SIM 2. Thus, the wireless communication network of the carrier 5G is selected. On the other hand, when the confidentiality level is high, the SIM selection unit 601 selects the SIM 1. Thus, the private 5G wireless communication network is selected.

Further, as illustrated in Fig. 11, the SIM selection unit 601 can also be configured to select a wireless communication network to transmit the notification data according to the sensor to be driven among the plurality of sensors of the sensor device 120. In the example illustrated in the drawing, when only the infrared camera is driven, the SIM selection unit 601 selects the SIM 2. Thus, the wireless communication network of the carrier 5G is selected. On the other hand, when the visible light camera and the infrared camera are driven, the SIM selection unit 601 selects the SIM 1. Thus, the private 5G wireless communication network is selected.

With the fixed terminal device 100 of the present embodiment described above, it is configured such that one of a plurality of different wireless communication networks is selected, and data based on the data from the sensor device 120 is transmitted as transmission data by using the selected wireless communication network. Here, the data based on the data from the sensor device 120 is detection data from the sensor device 120 or data processed by the data processing unit 602. Therefore, even if the communication destination is outside the communicable area A1 of one wireless communication network (for example, the private 5G wireless communication network), the notification data can be transmitted to the communication destination by selecting the carrier 5G wireless communication network (for example, a carrier communication network).

Further, in a case where the carrier 5G wireless communication network is used, since the video data is processed (mosaic processing or the like) and then transmitted, it is possible to prevent high-confidentiality data such as a video in which details of equipment in a factory are captured from leaking to the outside.

### (Second embodiment)

In the first embodiment, the case where the notification data is generated by processing the detection data after the SIM used for the wireless communication is selected has been described. In the second embodiment, a case where detection data is processed to generate notification data, and the SIM to be used for wireless communication is selected on the basis of the notification data will be described. Note that, in the following description, description of the same configuration as that of the first embodiment will be omitted in order to avoid duplication of description.

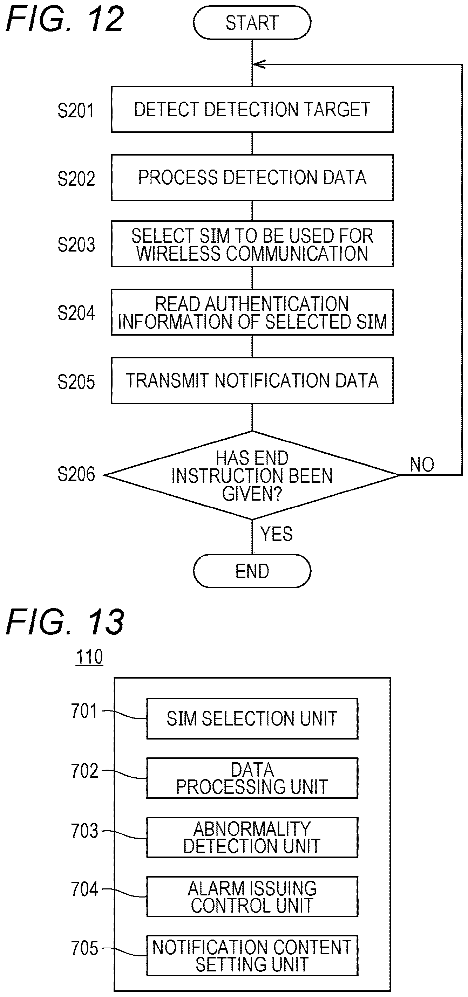

Fig. 12 is a flowchart illustrating an outline of a processing procedure of the control method for the fixed terminal device 100 in the second embodiment. Each processing of the flowchart illustrated in Fig. 12 is implemented by the CPU 111 executing the control program.

The control unit 110 of the present embodiment functions as the SIM selection unit 601 and the data processing unit 602 as does the control unit 110 of the first embodiment. However, in the present embodiment, the data processing unit 602 processes the detection data and generates the notification data before the SIM selection unit 601 selects the SIM to be used for wireless communication.

The administrator can appropriately input or change the setting regarding whether or not to perform processing on the detection data and the setting regarding the type of processing in a case of performing the processing, for example, through the input unit of the display device 200 or the mobile phone 500. The type of processing may be, for example, a change in the size or frame rate of the video, conversion from the video to audio information or text information, or the like.

The SIM selection unit 601 selects a SIM according to the notification data. For example, the SIM selection unit 601 selects the SIM 1 or the SIM 2 according to the confidentiality level of the notification data. The data processing unit 602 processes the detection data into notification data, and sets a confidentiality level according to the type (for example, video data of a visible light camera, video data of an infrared camera, audio information, text information, and the like) of the notification data. For example, the confidentiality level of the video data of the visible light camera is set to be high, and the confidentiality level of the video data, the audio information, and the text information of the infrared camera is set to be low.

The detection data is processed in step S202 of the flowchart illustrated in Fig. 12, and the SIM to be used for the wireless communication is selected in S203. Since the processes of steps S201 and S204 to S206 are the same as the respective processes of steps S101 and S104 to S106 of the first embodiment, a detailed description thereof will be omitted.

With the fixed terminal device 100 of the present embodiment described above, the detection data is processed to generate the notification data, and the SIM to be used for the wireless communication is selected on the basis of the notification data, so that the notification data can be transmitted with notification contents desired by the administrator.

### (Third embodiment)

In a third embodiment, the fixed terminal device 100 has a function of detecting an abnormality of a detection target, and is configured to issue an alarm when detecting the abnormality of the detection target. Note that, in the following description, description of the same configuration as that of the first embodiment will be omitted in order to avoid duplication of description.

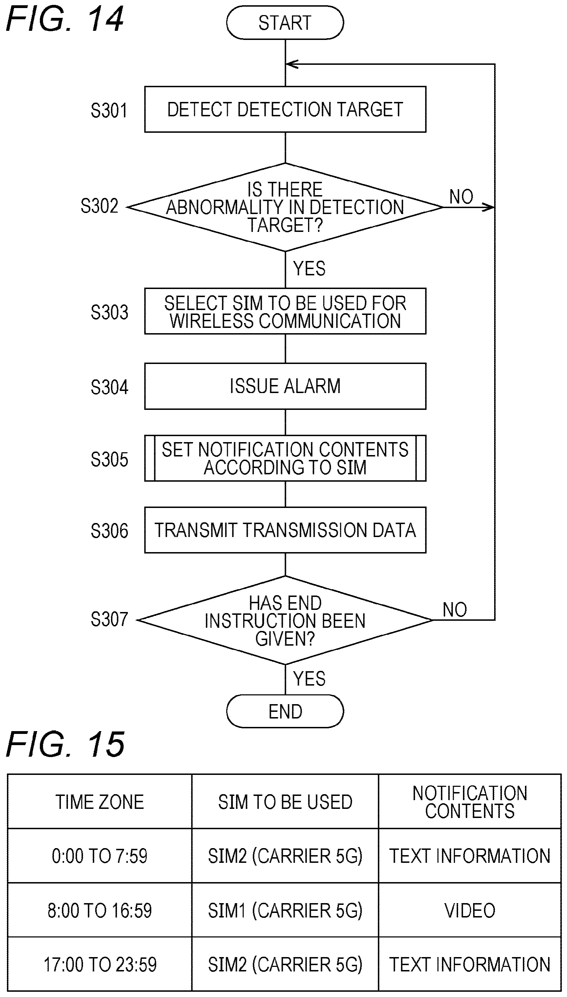

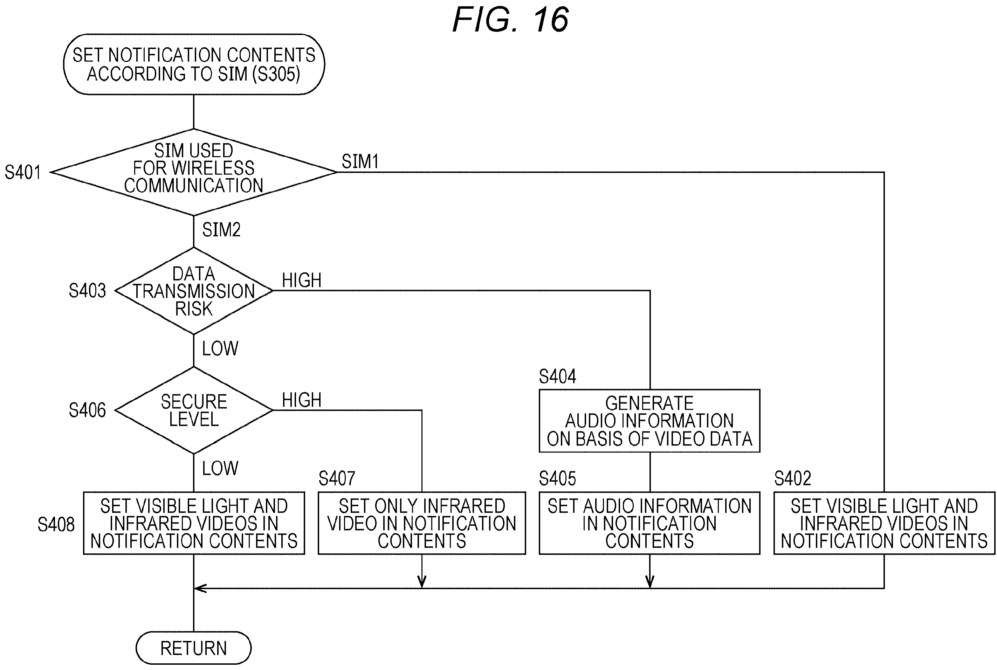

Fig. 13 is a functional block diagram illustrating a main configuration of the control unit 110 in the third embodiment, and Fig. 14 is a flowchart illustrating an outline of a processing procedure of a control method for the fixed terminal device 100 in the third embodiment. Each function of the control unit 110 illustrated in Fig. 13 and each process of the flowchart illustrated in Fig. 14 are implemented by the CPU 111 executing the control program. Further, Fig. 15 is a diagram illustrating a method of setting notification contents for the administrator according to the SIM used for wireless communication. Furthermore, Fig. 16 is a flowchart illustrating a method of setting notification contents for the administrator according to the SIM used for wireless communication.

As illustrated in Fig. 13, in the present embodiment, the control unit 110 functions as a SIM selection unit 701, a data processing unit 702, an abnormality detection unit 703, an alarm issuing control unit 704, and a notification content setting unit 705.

In the present embodiment, the SIM selection unit 701 selects the SIM to be used for wireless communication as does the SIM selection unit 601 in the first embodiment. Further, the data processing unit 702 generates notification data (for example, text information data, audio information data, and the like) on the basis of the detection data output from the sensor device 120 according to the SIM selected by the SIM selection unit 701. Furthermore, the abnormality detection unit 703 detects an abnormality of the detection target, and the alarm issuing control unit 704 performs control to issue an alarm when the abnormality detection unit 703 determines that there is an abnormality in the detection target. Further, the notification content setting unit 705 sets the notification contents (for example, video data, audio information, text information, and the like) according to the SIM selected by the SIM selection unit 701. Hereinafter, an outline of a processing procedure of the control method for the fixed terminal device 100 in the present embodiment will be described.

In Fig. 14, the processes of "detect the detection target" in step S301, "select the SIM to be used for wireless communication" in step S303, and "is end instruction present?" in step S307 are the same as the respective processes of steps S101, S102, and S106 in the first embodiment, and thus, a detailed description thereof is omitted.

First, the detection target is detected (step S301). The sensor device 120 captures a video of the piping equipment P as the detection target, and outputs video data of the visible light camera and the infrared camera.

Next, it is determined whether or not there is an abnormality in the detection target (step S302). As described above, the infrared camera of the sensor device 120 is sensitive to a particular gas having a predetermined absorption wavelength. For example, the abnormality detection unit 703 measures a luminance value in each part of the video for each frame of the video data of the infrared camera. When gas leakage occurs, heat radiation from the background is absorbed, and a luminance value of a gas leakage portion changes due to heat radiation by the gas. The gas is diffused in the atmosphere, and thus the luminance value of the gas leakage portion fluctuates. It is determined that there is gas leakage (abnormality) on the basis of such a change and fluctuation of the luminance value.

Next, the SIM to be used for wireless communication is selected (step S303). The SIM selection unit 701 selects the SIM 1 or the SIM 2 according to the state of the piping equipment P (normal or abnormal) to select the wireless communication network to transmit the notification data.

Next, an alarm is issued (step S304). When the abnormality detection unit 703 determines that there is gas leakage in the piping equipment P, the alarm issuing control unit 704 generates alarm information and notifies the administrator of the alarm information. When the SIM 1 is selected by the SIM selection unit 701, the alarm issuing control unit 704 performs control to display a warning such as "gas leakage has occurred" on the screen of the display device 200 as the alarm information and to generate an alarm sound from the speaker of the display device 200, for example. On the other hand, when the SIM 2 is selected by the SIM selection unit 701, the alarm issuing control unit 704 performs control to transmit a mail indicating that gas leakage has occurred to the mobile phone 500 of the administrator. Alternatively, when the SIM 2 is selected, the alarm issuing control unit 704 performs control to display a warning such as "gas leakage has occurred" on the screen of the mobile phone 500 of the administrator and to generate an alarm sound from the speaker of the mobile phone 500.

Next, the notification contents are set according to the SIM (step S305), and the notification content setting unit 705 determines notification contents for the administrator according to the SIM selected by the SIM selection unit 701. For example, as illustrated in Fig. 15, when the SIM 1 is selected, the notification content setting unit 705 sets the video output from the sensor device 120 (the video of the visible light camera and the infrared camera) as the notification contents.

On the other hand, when the SIM 2 is selected, text information is set in the notification contents. When the notification contents are set to the text information, the data processing unit 702 generates text information including information such as the type of the abnormality (for example, gas leakage) in the piping equipment P, the occurrence time of the abnormality, the area number of the occurrence area, the identification number of the monitoring camera (fixed terminal device 100) that has captured the abnormality, and capturing angle information of the monitoring camera on the basis of the video data. Therefore, when the SIM 2 is selected, the information amount of the notification data is reduced as compared with a case where the SIM 1 is selected.

Next, the notification data is transmitted (step S306). The communication unit 150 transmits the notification data of the notification contents set by the notification content setting unit 705. When the notification contents are video, the communication unit 150 transmits video data to the display device 200. On the other hand, in a case where the notification contents are text information, the communication unit 150 transmits a mail including the text information to the mobile phone 500 of the administrator. Thus, it is possible to avoid transmission of a video with high confidentiality through the carrier 5G.

In addition, as illustrated in Fig. 16, a configuration may be employed in which the notification contents for the administrator is set according to the levels of the "data transmission risk" and the "secure level". When the SIM to be used for wireless communication is the SIM 1 (step S401: SIM1), the notification content setting unit 705 sets visible light and infrared videos in the notification contents (step S402). On the other hand, when the SIM used for the wireless communication is the SIM 2 (step S401: SIM 2), the data transmission risk is determined (step S403). The data transmission risk is, for example, a risk such as loss of video data during communication.

When the data transmission risk is high (step S403: high), the audio information is generated on the basis of the video data (step S404). In the carrier 5G wireless communication network, a telephone call is easily connected, and call quality is stable. In the present embodiment, in order to utilize the carrier 5G wireless communication network, the data processing unit 702 on the fixed terminal device 100 side generates audio information on the basis of the video data, and the notification content setting unit 705 sets the audio information in the notification contents (step S405). By notifying the gas leakage of the piping equipment P by telephone, the data transmission risk can be suppressed, and the administrator can be reliably notified of the gas leakage of the piping equipment P.

On the other hand, in a case where the data transmission risk is low (step S403: low), the notification content setting unit 705 determines the secure level (step S406). In a case where the secure level is high (step S406: high), since high confidentiality is required for wireless communication, the notification content setting unit 705 sets only the infrared video in the notification contents (step S407). On the other hand, in a case where the secure level is low (step S406: low), since confidentiality is not required, the visible light and infrared light videos are set in the notification contents (step S408).

As described above, in the processing of the flowchart illustrated in Fig. 14, the detection target is detected, and the presence or absence of an abnormality of the detection target (the state of the detection target) is determined. When there is an abnormality in the detection target, an alarm is issued and notification contents are set according to the SIM used for wireless communication. Then, the notification data of the notification contents is transmitted.

With the fixed terminal device 100 of the present embodiment described above, the following effects are obtained in addition to the effects of the first embodiment.

Since the fixed terminal device 100 issues an alarm when detecting an abnormality such as gas leakage, the administrator easily notices the abnormality.

Further, since the notification contents are set according to the data transmission risk and the secure level, it is possible to notify the administrator more effectively.

### (Fourth embodiment)

In a fourth embodiment, a case where the SIM to be used is switched according to the presence or absence of an abnormality of the detection target will be described. Note that, in the following description, description of the same configuration as that of the third embodiment will be omitted in order to avoid duplication of description.

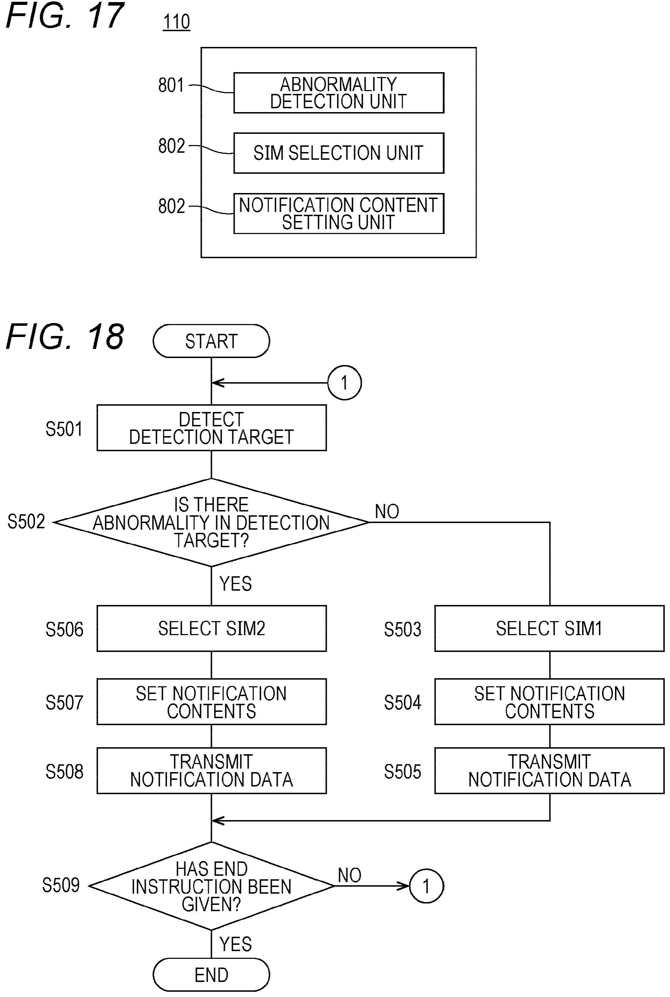

Fig. 17 is a functional block diagram illustrating a main configuration of the control unit 110 in the fourth embodiment, and Fig. 18 is a flowchart illustrating an outline of a processing procedure of a control method for the fixed terminal device 100 in the fourth embodiment. Each function of the control unit 110 illustrated in Fig. 17 and the processing of the flowchart illustrated in Fig. 18 are implemented by the CPU 111 executing the control program.

In the present embodiment, when the SIM 1 is selected, the fixed terminal device 100 communicates with the display device 200 by using the private 5G wireless communication network, and when the SIM 2 is selected, the fixed terminal device 100 communicates with a display device (not illustrated) of a centralized management center of a main office by using the carrier 5G wireless communication network. The fixed terminal device 100, the display device 200, and the display device of the centralized management center constitute the monitoring system 10.

As illustrated in Fig. 17, the control unit 110 includes an abnormality detection unit 801, a SIM selection unit 802, and a notification content setting unit 803. The abnormality detection unit 801 detects an abnormality of the detection target, and the SIM selection unit 802 selects a SIM on a detection result by the abnormality detection unit 801. Further, the notification content setting unit 803 sets the notification contents for the administrator according to the SIM selected by the SIM selection unit 802. Hereinafter, an outline of a processing procedure of the control method for the fixed terminal device 100 in the present embodiment will be described.

As illustrated in Fig. 18, the detection target is detected (step S501). The sensor device 120 captures a video of the piping equipment P as the detection target, and outputs video data of the visible light camera and the infrared camera.

Next, it is determined whether or not there is an abnormality in the detection target (step S502). For example, the abnormality detection unit 801 determines the presence or absence of abnormality such as gas leakage in the piping equipment on the basis of the video data of the infrared camera.

When there is no abnormality in the detection target (step S502: NO), the SIM selection unit 802 selects the SIM 1 (step S503). The SIM 1 is a SIM for communicating with the display device 200 in the centralized monitoring room in the factory using the private 5G wireless communication network.

Next, notification contents are set (step S504). The notification content setting unit 803 sets the videos of the visible light camera and the infrared camera as the notification contents for the administrator of the centralized monitoring room in the factory.

Next, notification data is transmitted (step S505). The communication unit 150 transmits the notification data of the notification contents set by the notification content setting unit 803 to the display device 200. Then, it is determined whether an end instruction has been given (step S509). In a case where an end instruction has been given (step S509: YES), the process is ended (end), and in a case where no end instruction has been given (step S509: NO), the process proceeds to the process of step S501.

On the other hand, when there is an abnormality in the detection target (step S502: YES), the SIM selection unit 802 selects the SIM 2 (step S506). The SIM 2 is a SIM for communicating with the display device of the centralized management center in the main office on a site different from the factory (outside the communicable area A1) by using the carrier 5G wireless communication network.

Next, notification contents are set (step S507). The notification content setting unit 803 sets, in the notification contents for the administrator of the centralized management center in the main office, the video of the infrared camera, the area number of the area where the abnormality has occurred, the identification number of the monitoring camera (fixed terminal device 100) that has captured the abnormality, and the information related to the capturing angle of the monitoring camera.

Next, notification data is transmitted (step S508). The communication unit 150 transmits the notification data of the notification contents set by the notification content setting unit 803. The display device of the centralized management center in the main office receives the notification data of the notification contents and displays the notification data on the screen. The notification contents do not include a video of visible light. Therefore, the display device combines a visible image of the piping equipment P at a normal time when gas leakage has not occurred as viewed from the monitoring camera that has captured gas leakage on the basis of the video of the infrared camera, the area number of the area where the gas leakage has occurred, the identification number of the monitoring camera, and the information related to the capturing angle of the monitoring camera. This is because the information amount is small only by the video of the infrared camera, and it is difficult to specify the position of the gas leakage and to determine the degree of danger of the abnormality. Moreover, the display device superimposes the visible image of the piping equipment P at the normal time and the video of the infrared camera included in the notification contents. Thus, the position of the gas leakage of the piping equipment P can be specified on the image of the piping equipment P. Alternatively, images of the piping equipment P captured by monitoring cameras (visible light cameras) disposed at multiple locations are recorded in advance as visible images at the normal time, and when gas leakage is detected, an image of the piping equipment P at the normal time as viewed from the monitoring camera that has captured the gas leakage can be acquired from the area number and the identification number of the monitoring camera.

As described above, in the processing of the flowchart of Fig. 18, the SIM to be used is switched according to the presence or absence of the abnormality of the detection target (the state of the detection target), the notification contents according to the SIM is set, and the notification data of the notification contents is transmitted to the display device 200 of the centralized monitoring room in the factory or the display device of the centralized management center in the main office.

The fixed terminal device 100 of the present embodiment described above has the following effects in addition to the effects of the third embodiment.

When an abnormality such as gas leakage is detected, the fixed terminal device 100 transmits the data of the notification contents to the centralized management center of the main office located away from the factory where the piping equipment P is located using the carrier 5G. Therefore, it is possible to transmit high-quality and large-volume information while preventing leakage of confidential information regarding the piping equipment P.

Note that, in the above example, the case where the video of the infrared camera transmitted from the fixed terminal device 100 and the visible image prepared by the display device of the centralized management center are combined (superimposed) has been described, but the present embodiment is not limited to such a case. For example, the display device of the centralized management center can accumulate not only the visible image but the notification data (detection data of each sensor) transmitted from the fixed terminal device 100 at the normal time of the detection target, and combine or compare the accumulated notification data with the notification data transmitted at the time of abnormality of an inspection target.

### (Fifth embodiment)

In the first to fourth embodiments described above, the monitoring system 10 has been described by exemplifying a case where piping equipment such as a factory and a plant is monitored. In a fifth embodiment, the monitoring system 10 will be described by exemplifying a case of watching over a patient in a hospital, an elderly facility, or the like (hereinafter referred to as "facility"). Note that, in the following description, description of the same configuration as that of the fourth embodiment will be omitted in order to avoid duplication of description.

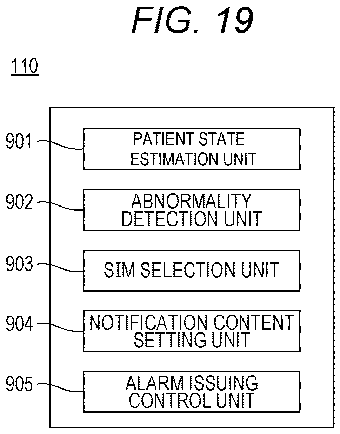

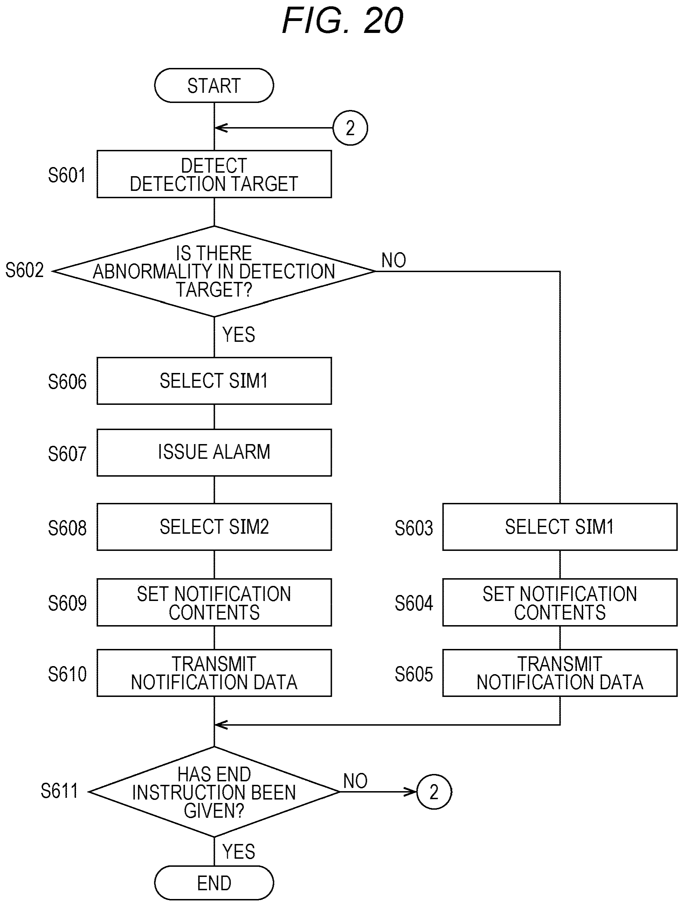

Fig. 19 is a functional block diagram illustrating a main configuration of the control unit 110 in the fifth embodiment, and Fig. 20 is a flowchart illustrating an outline of a processing procedure of a control method for the fixed terminal device 100 in the fifth embodiment. Each function of the control unit 110 illustrated in Fig. 19 and each process of the flowchart illustrated in Fig. 20 are implemented by the CPU 111 executing the control program.

Although not illustrated, in the present embodiment, it is assumed that a private 5G base station 300 is installed in the facility and a carrier 5G base station 400 is installed in a place near the facility. Wireless communication using the private 5G is possible in the facility. Further, communication with the outside of the facility (outside the communication area of the private 5G) is possible by the carrier 5G wireless communication network.

In the present embodiment, among the configurations of the fixed terminal device 100, the hardware configurations of the control unit 110, the first reading unit 130, the second reading unit 140, and the communication unit 150 are the same as those of the first to fourth embodiments. Further, the sensor device 120 includes a visible light camera, a Doppler sensor, and a LIDAR (Light Detection and Ranging, Laser Imaging Detection and Ranging). In the present embodiment, the fixed terminal device 100 is installed, for example, on a ceiling or the like of a living room of a patient in the facility, and the sensor device 120 is arranged so as to face a bed of the patient installed on the floor.

The visible light camera captures a video of the patient as a detection target and outputs video data. Furthermore, the Doppler sensor transmits and receives a microwave to and from the patient, and detects and outputs a Doppler shift of the microwave generated by a body motion (for example, respiration, heartbeat) of the patient. Further, the LIDAR measures and outputs, for example, a distance from the ceiling to each part of the patient's body.

As illustrated in Fig. 19, the control unit 110 functions as a patient state estimation unit 901, an abnormality detection unit 902, a SIM selection unit 903, a notification content setting unit 904, and an alarm issuing control unit 905. The patient state estimation unit 901 estimates and records the state of the patient. More specifically, the patient state estimation unit 901 estimates the posture of the patient on the basis of an estimation result of estimating the skeleton of the patient using a known skeleton recognition technology from the video of the patient captured by the visible light camera and the distance to each part of the patient's body measured by the LIDAR. Further, the patient state estimation unit 901 estimates the respiration rate and the heart rate of the patient from the Doppler shift detected by the Doppler sensor. The state of the patient including the posture, the respiration rate (respiration information), and the heart rate (heart rate information) of the patient is stored in the auxiliary storage unit 114 in time series.

Hereinafter, an outline of a processing procedure of the control method for the fixed terminal device 100 in the present embodiment will be described. As illustrated in Fig. 20, first, the detection target is detected (step S601). The sensor device 120 captures a video of the patient as a detection target, and outputs video data of the visible light camera, a detection result of the Doppler sensor, and a measurement result of the LIDAR to the patient state estimation unit 901.

Next, it is determined whether or not there is an abnormality in the detection target (step S602). The patient state estimation unit 901 estimates the state of the patient, and the abnormality detection unit 902 determines the presence or absence of an abnormality of the patient on the basis of the estimated state of the patient. For example, the abnormality detection unit 902 determines that there is an abnormality in a case where there is a possibility of falling down or stopping breathing from the estimated state of the patient.

When there is no abnormality in the detection target (step S602: NO), the SIM selection unit 903 selects the SIM 1 (step S603). The SIM 1 is a SIM for communicating with a mobile terminal (not illustrated) of a staff member in the facility using the private 5G wireless communication network.

Next, notification contents are set (step S604). The notification content setting unit 904 sets the video of the visible light camera and the estimation result of the patient state as the notification contents for the staff in the facility. Note that, since the private 5G wireless communication network is used, there is no concern that private information of the patient such as a video showing the face of the patient is leaked by wireless communication.

Next, notification data is transmitted (step S605). The communication unit 150 transmits the notification data of the notification contents set by the notification content setting unit 904 to the staff's mobile terminal. Then, it is determined whether an end instruction has been given (step S611). In a case where an end instruction has been given (step S611: YES), the process is ended (end), and in a case where no end instruction has been given (step S611: NO), the process proceeds to the process of step S601. The end instruction is an instruction that the staff ends (interrupts) watching over the patient for some reason such as discharge of the patient.

On the other hand, when there is an abnormality in the detection target (step S602: YES), the SIM selection unit 903 selects the SIM 1.

Next, an alarm is issued (step S607). The alarm issuing control unit 905 issues the alarm when the abnormality detection unit 902 determines that there is an abnormality in the patient. The alarm issuing control unit 905 displays a warning such as "Mr./Ms. ∘∘ in room 101 has fallen" on a screen of the staff's mobile terminal, for example, as alarm information.

Next, the SIM selection unit 903 selects the SIM 2 (step S608). The SIM 2 is a SIM for communicating with a terminal device (for example, a personal computer (not illustrated)) in a place outside the facility, such as the home or work place of the patient, or the hospital where the attending physician of the patient is located, using the carrier 5G wireless communication network.

Next, notification contents are set (step S609). For example, in a case of communicating with a terminal device of a hospital where the attending physician is located, the notification content setting unit 904 sets the estimation result of skeleton detection, the respiration rate, the pulse rate, and the like in the notification contents for the attending physician. These pieces of information are information that cannot identify an individual. On the other hand, personal information including the patient's face and gender, or information that can identify the individual is not set in the notification contents. Thus, it is possible to prevent highly confidential data and information regarding the patient from being leaked.

Next, notification data is transmitted (step S610). The communication unit 150 transmits the notification data of the notification contents set by the notification content setting unit 904. The terminal device of the hospital where the attending physician is located receives the notification data of the notification contents and displays the notification data on the screen. Thus, the attending physician can immediately determine the state of the patient and instruct the staff of the facility to take necessary measures and the like.

As described above, in the processing of the flowchart of Fig. 20, the presence or absence of an abnormality of the detection target is determined, and when there is no abnormality in the detection target, the SIM 1 is selected as the SIM to be used for the wireless communication, and the notification data of the notification contents according to the SIM 1 is transmitted. On the other hand, when there is an abnormality in the detection target, the alarm is issued, the SIM used for wireless communication is switched to the SIM 2, notification contents according to the SIM 2 are set, and notification data is transmitted.

The fixed terminal device 100 of the present embodiment described above has the following effects in addition to the effects of the fourth embodiment.

When detecting an abnormality, the fixed terminal device 100 transmits the notification data limited to the information in which the individual cannot be specified using the carrier 5G. Therefore, it is possible to transmit high-quality and large-volume information such as patient video data inside the facility, and to prevent leakage of highly confidential data and information regarding the patient for transmission outside the facility.

As described above, the fixed terminal device, the control method, and the control program have been described in the embodiments. However, it goes without saying that the present invention can be appropriately added, modified, and omitted by those skilled in the art within the scope of the technical idea.

For example, in the first to fourth embodiments described above, the fixed terminal device 100 is exemplified as a monitoring camera that monitors gas leakage, but it is not limited to such a case, and the fixed terminal device 100 may be, for example, a security monitoring camera that detects a suspicious person. In addition, the security monitoring camera may have not only a configuration including both the visible light camera and the infrared camera but also a configuration including one of the visible light camera and the infrared camera.

In addition, in the above-described flowchart, some steps may be omitted, and other steps may be added. A part of each step may be executed simultaneously, or one step may be divided into a plurality of steps and executed.

In addition, the control program may be provided by a computer-readable recording medium such as a USB memory, a flexible disk, or a CD-ROM, or may be provided online via a network such as the Internet. In this case, the program recorded in the computer-readable recording medium is usually transferred to a memory, a storage, or the like and stored. In addition, this control program may be provided as, for example, independent application software, or may be incorporated in software of each device as one function of a server.

Further, a part or all of the processing executed by the program in the embodiment can be replaced with hardware such as a circuit and executed.

The present application is based on Japanese Patent Application No. 2021-113981 filed on July 9, 2021.

### Reference Signs List

- 100: Fixed terminal device
- 110: Control unit
- 120: Sensor device
- 130: First reading unit
- 140: Second reading unit
- 150: Communication unit
- 200: Display device
- 300: Private 5G base station
- 400: Carrier 5G base station
- 500: Mobile phone of administrator
- 601: SIM selection unit
- 602: Data processing unit
- 701: SIM selection unit
- 702: Data processing unit
- 703: Abnormality detection unit
- 704: Alarm issuing control unit
- 705: Notification content setting unit
- 801: Abnormality detection unit
- 802: SIM selection unit
- 803: Notification content setting unit
- 901: Patient state estimation unit
- 902: Abnormality detection unit
- 903: SIM selection unit
- 904: Notification content setting unit
- 905: Alarm issuing control unit

## Claims

1. A fixed terminal device (100) used in a communicable range with both a first wireless communication network and a second wireless communication network different from the first wireless communication network, the fixed terminal device comprising:
A sensor device (120);
a first reading unit (130) configured to read authentication information for connecting to the first wireless communication network;
a second reading unit (140) configured to read authentication information for connecting to the second wireless communication network;
a selection unit (601, 701, 802, 903) configured to select which of the first wireless communication network and the second wireless communication network to transmit transmission data based on data from the sensor device (120) and wherein the selection unit (601, 701, 802, 903) selects a wireless communication network to transmit the transmission data according to a state of a detection target of the sensor device (120), wherein the state of the detection target is determined based on the data from the sensor device (120), and wherein
the selection unit (601, 701, 802, 903) is further configured to select the wireless communication network to transmit the transmission data according to the determined state of the detection target; and
a transmission unit configured to, after the wireless communication network selected by the selection unit (601, 701, 802, 903) is authenticated by using the authentication information, transmit the transmission data by using the wireless communication network that has been authenticated.

2. The fixed terminal device (100) according to claim 1, wherein the first wireless communication network is a private wireless line, and the second wireless communication network is a wireless line of a mobile telecommunications carrier or a public wireless line.

3. The fixed terminal device (100) according to claim 1 or 2, wherein the first wireless communication network and the second wireless communication network are compliant with a same communication standard, and/or wherein the first wireless communication network and the second wireless communication network are wireless communication networks satisfying a regulation for a fifth generation wireless communication system.

4. The fixed terminal device (100) according to any one of claims 1 to 3, wherein the selection unit (601, 701, 802, 903) selects a wireless communication network to transmit the transmission data according to a confidentiality level of the data from the sensor device (120), or wherein the selection unit (601, 701, 802, 903) selects a wireless communication network to transmit the transmission data by using time information, or wherein
the sensor device (120) includes a plurality of sensors, and
the selection unit (601, 701, 802, 903) selects a wireless communication network to transmit the transmission data according to a sensor to be driven among the plurality of sensors.

5. The fixed terminal device (100) according to claim 2, wherein an information amount of transmission data transmitted by using the second wireless communication network is smaller than an information amount of transmission data transmitted by using the first wireless communication network.

6. The fixed terminal device (100) according to any one of claims 1 to 5, further comprising:
a data processing unit (602) configured to processe data from the sensor device (120), wherein
the data processing unit (602)
performs data processing of any one of encryption processing, mosaic processing, conversion processing into audio information, and conversion processing into text information is performed on data from the sensor device (120) in accordance with the wireless communication network selected by the selection unit (601, 701, 802, 903), and generates the transmission data.

7. The fixed terminal device (100) according to any one of claims 1 to 5, further comprising:
a data processing unit (602) configured to processe data from the sensor device (120), wherein
the data processing unit (602)
performs data processing of any one of encryption processing, mosaic processing, conversion processing into audio information, and conversion processing into text information on data from the sensor device (120) and generates the transmission data, and
the selection unit (601, 701, 802, 903) selects a wireless communication network to transmit the transmission data on a basis of the transmission data generated by the data processing unit (602).

8. The fixed terminal device (100) according to any one of claims 1 to 6, wherein a notification content of the transmission data is set according to the wireless communication network selected by the selection unit (601, 701, 802, 903).

9. The fixed terminal device (100) according to any one of claims 1 to 8, further comprising:
an abnormality detection unit (702, 801, 902) configured to detect an abnormality of a detection target of the sensor device (120), wherein
when the abnormality detection unit (702, 801, 902) detects an abnormality, alarm information according to the wireless communication network selected by the selection unit (601, 701, 802, 903) is generated and transmitted.

10. The fixed terminal device (100) according to claim 1, further comprising:
an abnormality detection unit (702, 801, 902) configured to detect an abnormality of a detection target of the sensor device (120), wherein
the selection unit (601, 701, 802, 903) selects a wireless communication network to transmit the transmission data according to a detection result by the abnormality detection unit (702, 801, 902).

11. A control method for a fixed terminal device (100) used in a communicable range with both a first wireless communication network and a second wireless communication network different from the first wireless communication network, the method comprising:
a detection step of detecting a detection target by a sensor device (120);
a selection step of selecting which of the first wireless communication network and the second wireless communication network to transmit transmission data based on data from the sensor device (120), and wherein the wireless communication network transmits the transmission data according to a state of a detection target of the sensor device (120), wherein the state of the detection target is determined based on the data from the sensor device (120),
a selection step of selecting the wireless communication network to transmit the transmission data according to the determined state of the detection target;
a reading step of reading authentication information for connecting to the wireless communication network selected in the selection step and for connecting to the first wireless communication network or the second wireless communication network; and
a transmission step of, after the wireless communication network selected in the selection step is authenticated by using the authentication information, transmitting the transmission data by using the wireless communication network that has been authenticated.

12. The control method according to claim 11, wherein the first wireless communication network is a private wireless line, and the second wireless communication network is a wireless line of a mobile telecommunications carrier or a public wireless line.

13. The control method according to claim 11 or 12, further comprising a processing step of performing any one of encryption processing, mosaic processing, conversion processing into audio information, and conversion processing into text information on data from the sensor device (120) according to the wireless communication network selected in the selection step, and generating the transmission data, or further comprising:
a processing step of performing any one of encryption processing, mosaic processing, conversion processing into audio information, and conversion processing into text information on data from the sensor device (120) before the selection step and generating the transmission data, wherein
in the selection step, a wireless communication network to transmit the transmission data is selected on a basis of the transmission data generated in the processing step.

14. A control program for causing a computer to execute processing included in the control method according to any one of claims 11 to 13.

## Patentansprüche

1. Stationäre Terminalvorrichtung (100), die in einem Kommunikationsbereich sowohl mit einem ersten drahtlosen Kommunikationsnetzwerk als auch mit einem zweiten drahtlosen Kommunikationsnetzwerk, das sich vom ersten drahtlosen Kommunikationsnetzwerk unterscheidet, verwendet wird, wobei die stationäre Terminalvorrichtung umfasst:
eine Sensorvorrichtung (120);
eine erste Leseeinheit (130), die so konfiguriert ist, dass sie Authentifizierungsinformationen zum Herstellen einer Verbindung mit dem ersten drahtlosen Kommunikationsnetzwerk liest;
eine zweite Leseeinheit (140), die zum Auslesen von Authentifizierungsinformationen für die Verbindung mit dem zweiten drahtlosen Kommunikationsnetzwerk konfiguriert ist;
eine Auswahleinheit (601, 701, 802, 903), die dazu konfiguriert ist, auszuwählen, welches der ersten und zweiten drahtlosen Kommunikationsnetzwerke für die Übertragung von Übertragungsdaten verwendet werden soll, basierend auf Daten von der Sensoreinrichtung (120), und wobei die Auswahleinheit (601, 701, 802, 903) ein drahtloses Kommunikationsnetzwerk zur Übertragung der Übertragungsdaten entsprechend einem Zustand eines Detektionsziels der Sensorvorrichtung (120) auswählt, wobei der Zustand des Detektionsziels auf der Grundlage der Daten von der Sensorvorrichtung (120) bestimmt wird, und wobei die Auswahleinheit (601, 701, 802, 903) weiterhin so konfiguriert ist, dass sie das drahtlose Kommunikationsnetzwerk zur Übertragung der Sendedaten entsprechend dem ermittelten Zustand des Erfassungsziels auswählt; und
eine Sendeeinheit, die so konfiguriert ist, dass sie, nachdem das von der Auswahleinheit (601, 701, 802, 903) ausgewählte drahtlose Kommunikationsnetzwerk unter Verwendung der Authentifizierungsinformationen authentifiziert wurde, die Sendedaten unter Verwendung des authentifizierten drahtlosen Kommunikationsnetzwerks überträgt.

2. Stationäre Terminalvorrichtung (100) nach Anspruch 1, wobei das erste drahtlose Kommunikationsnetzwerk eine private drahtlose Leitung ist und das zweite drahtlose Kommunikationsnetzwerk eine drahtlose Leitung eines Mobilfunkbetreibers oder eine öffentliche drahtlose Leitung ist.

3. Stationäre Terminalvorrichtung (100) nach Anspruch 1 oder 2, wobei das erste drahtlose Kommunikationsnetzwerk und das zweite drahtlose Kommunikationsnetzwerk einem gleichen Kommunikationsstandard entsprechen und/oder wobei das erste drahtlose Kommunikationsnetzwerk und das zweite drahtlose Kommunikationsnetzwerk drahtlose Kommunikationsnetzwerke sind, die eine Vorschrift für ein drahtloses Kommunikationssystem der fünften Generation erfüllen.

4. Stationäre Terminalvorrichtung (100) nach einem der Ansprüche 1 bis 3, wobei die Auswahleinheit (601, 701, 802, 903) ein drahtloses Kommunikationsnetzwerk zur Übertragung der Übertragungsdaten entsprechend einer Vertraulichkeitsstufe der Daten von der Sensorvorrichtung (120) auswählt, oder wobei die Auswahleinheit (601, 701, 802, 903) ein drahtloses Kommunikationsnetzwerk zur Übertragung der Übertragungsdaten unter Verwendung von Zeitinformationen auswählt, oder wobei
die Sensorvorrichtung (120) eine Vielzahl von Sensoren umfasst und
die Auswahleinheit (601, 701, 802, 903) ein drahtloses Kommunikationsnetzwerk zur Übertragung der Übertragungsdaten entsprechend einem anzusteuernden Sensor aus der Vielzahl von Sensoren auswählt.

5. Stationäre Terminalvorrichtung (100) nach Anspruch 2, wobei die Informationsmenge der unter Verwendung des zweiten drahtlosen Kommunikationsnetzes übertragenen Übertragungsdaten geringer ist als die Informationsmenge der unter Verwendung des ersten drahtlosen Kommunikationsnetzes übertragenen Übertragungsdaten.

6. Stationäre Terminalvorrichtung (100) nach einem der Ansprüche 1 bis 5, weiter umfassend:
eine Datenverarbeitungseinheit (602), die so konfiguriert ist, dass sie Daten von der Sensorvorrichtung (120) verarbeitet, wobei
die Datenverarbeitungseinheit (602) eine Datenverarbeitung durchführt, die aus einer Verschlüsselungsverarbeitung, einer Mosaikverarbeitung, einer Umwandlungsverarbeitung in Audioinformationen und einer Umwandlungsverarbeitung in Textinformationen besteht, und zwar an Daten von der Sensorvorrichtung (120) entsprechend dem von der Auswahleinheit (601, 701, 802, 903) ausgewählten drahtlosen Kommunikationsnetzwerk, und die Übertragungsdaten erzeugt.

7. Stationäre Terminalvorrichtung (100) nach einem der Ansprüche 1 bis 5, ferner umfassend:
eine Datenverarbeitungseinheit (602), die so konfiguriert ist, dass sie Daten von der Sensorvorrichtung (120) verarbeitet, wobei
die Datenverarbeitungseinheit (602) eine Datenverarbeitung durchführt, die entweder eine Verschlüsselungsverarbeitung, eine Mosaikverarbeitung, eine Umwandlungsverarbeitung in Audioinformationen oder eine Umwandlungsverarbeitung in Textinformationen der Daten von der Sensoreinheit (120) umfasst, und die Sendedaten erzeugt, und
die Auswahleinheit (601, 701, 802, 903) auf der Grundlage der von der Datenverarbeitungseinheit (602) erzeugten Übertragungsdaten ein drahtloses Kommunikationsnetzwerk zur Übertragung der Übertragungsdaten auswählt.

8. Stationäre Terminalvorrichtung (100) nach einem der Ansprüche 1 bis 6, wobei ein Benachrichtigungsinhalt der Übertragungsdaten entsprechend dem von der Auswahleinheit (601, 701, 802, 903) ausgewählten drahtlosen Kommunikationsnetzwerk festgelegt wird.

9. Stationäre Terminalvorrichtung (100) nach einem der Ansprüche 1 bis 8, weiter umfassend:
eine Abnormalitätserfassungseinheit (702, 801, 902), die so konfiguriert ist, dass sie eine Abnormalität eines Erfassungsziels der Sensorvorrichtung (120) erfasst, wobei
wenn die Abnormalitätserfassungseinheit (702, 801, 902) eine Abnormalität erfasst, Alarminformationen entsprechend dem von der Auswahleinheit (601, 701, 802, 903) ausgewählten drahtlosen Kommunikationsnetzwerk erzeugt und übertragen werden.

10. Stationäre Terminalvorrichtung (100) nach Anspruch 1, weiter umfassend:
eine Abnormalitätserfassungseinheit (702, 801, 902), die dazu ausgelegt ist, eine Abnormalität eines Erfassungsziels der Sensorvorrichtung (120) zu erfassen, wobei
die Auswahleinheit (601, 701, 802, 903) ein drahtloses Kommunikationsnetzwerk zur Übertragung der Übertragungsdaten entsprechend einem Erkennungsergebnis der Abnormalitätserfassungseinheit (702, 801, 902) auswählt.

11. Verfahren zur Steuerung für eine stationäre Terminalvorrichtung (100), das in einem Kommunikationsbereich sowohl mit einem ersten drahtlosen Kommunikationsnetzwerk als auch mit einem zweiten drahtlosen Kommunikationsnetzwerk, das sich vom ersten drahtlosen Kommunikationsnetzwerk unterscheidet, verwendet wird, wobei das Verfahren umfasst:
einen Erfassungsschritt zum Erfassen eines Erfassungsziels durch eine Sensorvorrichtung (120);
einen Auswahlschritt zum Auswählen, welches der ersten drahtlosen Kommunikationsnetze und der zweiten drahtlosen Kommunikationsnetze zur Übertragung der Übertragungsdaten verwendet werden soll, basierend auf Daten von der Sensorvorrichtung (120), und wobei das drahtlose Kommunikationsnetz die Übertragungsdaten entsprechend einem Zustand eines Erkennungsziels der Sensorvorrichtung (120) überträgt, wobei der Zustand des Erkennungsziels basierend auf den Daten von der Sensorvorrichtung (120) bestimmt wird,
einen Auswahlschritt zum Auswählen des drahtlosen Kommunikationsnetzwerks zur Übertragung der Übertragungsdaten entsprechend dem ermittelten Zustand des Erfassungsziels;
einen Leseschritt zum Auslesen von Authentifizierungsinformationen zum Herstellen einer Verbindung mit dem im Auswahlschritt ausgewählten drahtlosen Kommunikationsnetzwerk und zum Herstellen einer Verbindung mit dem ersten oder dem zweiten drahtlosen Kommunikationsnetzwerk; und
einen Übertragungsschritt, bei dem, nachdem das im Auswahlschritt ausgewählte drahtlose Kommunikationsnetzwerk unter Verwendung der Authentifizierungsinformationen authentifiziert wurde, die Übertragungsdaten unter Verwendung des authentifizierten drahtlosen Kommunikationsnetzwerks übertragen werden.

12. Verfahren zur Steuerung nach Anspruch 11, wobei das erste drahtlose Kommunikationsnetzwerk eine private drahtlose Leitung ist und das zweite drahtlose Kommunikationsnetzwerk eine drahtlose Leitung eines Mobilfunkbetreibers oder eine öffentliche drahtlose Leitung ist.

13. Verfahren zur Steuerung nach Anspruch 11 oder 12, das weiter einen Verarbeitungsschritt umfasst, bei dem je nach dem im Auswahlschritt ausgewählten drahtlosen Kommunikationsnetzwerk eine der folgenden Verarbeitungen an den Daten von der Sensorvorrichtung (120) durchgeführt wird: eine Verschlüsselungsverarbeitung, eine Mosaikverarbeitung, eine Umwandlungsverarbeitung in Audioinformationen oder eine Umwandlungsverarbeitung in Textinformationen, und bei dem die Übertragungsdaten erzeugt werden, oder das ferner umfasst:
einen Verarbeitungsschritt, bei dem mindestens eine von Verschlüsselungsverarbeitung, Mosaikverarbeitung, Umwandlung in Audioinformationen und Umwandlung in Textinformationen an Daten von der Sensorvorrichtung (120) vor dem Auswahlschritt durchgeführt und die Übertragungsdaten erzeugt werden, wobei
im Auswahlschritt ein drahtloses Kommunikationsnetzwerk zur Übertragung der Übertragungsdaten auf der Grundlage der im Verarbeitungsschritt erzeugten Übertragungsdaten ausgewählt wird.

14. Ein Steuerprogramm, das einen Computer veranlasst, die in dem Steuerverfahren gemäß einem der Ansprüche 11 bis 13 enthaltenen Verarbeitungsschritte auszuführen.

## Revendications

1. Dispositif terminal fixe (100) utilisé dans une plage dans laquelle il peut communiquer à la fois avec un premier réseau de communication sans fil et un second réseau de communication sans fil différent du premier réseau de communication sans fil, le dispositif terminal fixe comprenant :
un dispositif capteur (120) ;
une première unité de lecture (130) configurée pour lire des informations d'authentification en vue d'une connexion au premier réseau de communication sans fil ;
une seconde unité de lecture (140) configurée pour lire des informations d'authentification en vue d'une connexion au second réseau de communication sans fil ;
une unité de sélection (601, 701, 802, 903) configurée pour sélectionner, sur la base de données provenant du dispositif capteur (120), lequel du premier réseau de communication sans fil et du second réseau de communication sans fil est utilisé pour transmettre des données de transmission, et dans lequel l'unité de sélection (601, 701, 802, 903) sélectionne un réseau de communication sans fil pour transmettre les données de transmission en fonction d'un état d'une cible de détection du dispositif capteur (120), l'état de la cible de détection étant déterminé sur la base des données provenant du dispositif capteur (120), et dans lequel
l'unité de sélection (601, 701, 802, 903) est en outre configurée pour sélectionner le réseau de communication sans fil pour transmettre les données de transmission en fonction de l'état déterminé de la cible de détection ; et
une unité de transmission configurée pour, une fois que le réseau de communication sans fil sélectionné par l'unité de sélection (601, 701, 802, 903) a été authentifié à l'aide des informations d'authentification, transmettre les données de transmission en utilisant le réseau de communication sans fil qui a été authentifié.

2. Dispositif terminal fixe (100) selon la revendication 1, dans lequel le premier réseau de communication sans fil est une ligne sans fil privée, et le second réseau de communication sans fil est une ligne sans fil d'un opérateur de télécommunications mobiles ou une ligne sans fil publique.

3. Dispositif terminal fixe (100) selon la revendication 1 ou 2, dans lequel le premier réseau de communication sans fil et le second réseau de communication sans fil sont conformes à une même norme de communication, et/ou dans lequel le premier réseau de communication sans fil et le second réseau de communication sans fil sont des réseaux de communication sans fil satisfaisant à une réglementation relative à un système de communication sans fil de cinquième génération.

4. Dispositif terminal fixe (100) selon l'une des revendications 1 à 3, dans lequel l'unité de sélection (601, 701, 802, 903) sélectionne un réseau de communication sans fil pour transmettre les données de transmission en fonction d'un niveau de confidentialité des données provenant du dispositif capteur (120), ou dans lequel l'unité de sélection (601, 701, 802, 903) sélectionne un réseau de communication sans fil pour transmettre les données de transmission en utilisant des informations temporelles, ou dans lequel
le dispositif capteur (120) comprend une pluralité de capteurs, et
l'unité de sélection (601, 701, 802, 903) sélectionne un réseau de communication sans fil pour transmettre les données de transmission en fonction d'un capteur devant être activé parmi la pluralité de capteurs.

5. Dispositif terminal fixe (100) selon la revendication 2, dans lequel une quantité d'informations de données de transmission transmises à l'aide du second réseau de communication sans fil est inférieure à une quantité d'informations de données de transmission transmises à l'aide du premier réseau de communication sans fil.

6. Dispositif terminal fixe (100) selon l'une des revendications 1 à 5, comprenant en outre :
une unité de traitement de données (602) configurée pour traiter des données provenant du dispositif capteur (120), dans lequel
l'unité de traitement de données (602)
réalise un traitement de données consistant en l'un quelconque d'un traitement de chiffrement, d'un traitement de mosaïque, d'un traitement de conversion en informations audio et d'un traitement de conversion en informations textuelles sur des données provenant du dispositif capteur (120) en fonction du réseau de communication sans fil sélectionné par l'unité de sélection (601, 701, 802, 903), et génère les données de transmission.

7. Dispositif terminal fixe (100) selon l'une des revendications 1 à 5, comprenant en outre :
une unité de traitement de données (602) configurée pour traiter des données provenant du dispositif capteur (120), dans lequel
l'unité de traitement de données (602)
réalise un traitement de données consistant en l'un quelconque d'un traitement de chiffrement, d'un traitement de mosaïque, d'un traitement de conversion en informations audio et d'un traitement de conversion en informations textuelles sur des données provenant du dispositif capteur (120) et génère les données de transmission, et
l'unité de sélection (601, 701, 802, 903) sélectionne un réseau de communication sans fil pour transmettre les données de transmission sur la base des données de transmission générées par l'unité de traitement de données (602).

8. Dispositif terminal fixe (100) selon l'une des revendications 1 à 6, dans lequel un contenu de notification des données de transmission est défini en fonction du réseau de communication sans fil sélectionné par l'unité de sélection (601, 701, 802, 903).

9. Dispositif terminal fixe (100) selon l'une des revendications 1 à 8, comprenant en outre :
une unité de détection d'anomalie (702, 801, 902) configurée pour détecter une anomalie d'une cible de détection du dispositif capteur (120), dans lequel
lorsque l'unité de détection d'anomalie (702, 801, 902) détecte une anomalie, des informations d'alarme en fonction du réseau de communication sans fil sélectionné par l'unité de sélection (601, 701, 802, 903) sont générées et transmises.

10. Dispositif terminal fixe (100) selon la revendication 1, comprenant en outre :
une unité de détection d'anomalie (702, 801, 902) configurée pour détecter une anomalie d'une cible de détection du dispositif capteur (120), dans lequel
l'unité de sélection (601, 701, 802, 903) sélectionne un réseau de communication sans fil pour transmettre les données de transmission en fonction d'un résultat de détection fourni par l'unité de détection d'anomalie (702, 801, 902).

11. Procédé de commande d'un dispositif terminal fixe (100) utilisé dans une plage dans laquelle il peut communiquer à la fois avec un premier réseau de communication sans fil et un second réseau de communication sans fil différent du premier réseau de communication sans fil, le procédé comprenant :
une étape de détection consistant à détecter une cible de détection au moyen d'un dispositif capteur (120) ;
une étape de sélection consistant à sélectionner, sur la base de données provenant du dispositif capteur (120), lequel du premier réseau de communication sans fil et du second réseau de communication sans fil est utilisé pour transmettre des données de transmission, et dans lequel le réseau de communication sans fil transmet les données de transmission en fonction d'un état d'une cible de détection du dispositif capteur (120), l'état de la cible de détection étant déterminé sur la base des données provenant du dispositif capteur (120) ;
une étape de sélection consistant à sélectionner le réseau de communication sans fil utilisé pour transmettre les données de transmission en fonction de l'état déterminé de la cible de détection ;
une étape de lecture consistant à lire des informations d'authentification pour se connecter au réseau de communication sans fil sélectionné lors de l'étape de sélection et pour se connecter au premier réseau de communication sans fil ou au second réseau de communication sans fil ; et
une étape de transmission consistant, une fois que le réseau de communication sans fil sélectionné lors de l'étape de sélection a été authentifié à l'aide des informations d'authentification, à transmettre les données de transmission en utilisant le réseau de communication sans fil qui a été authentifié.

12. Procédé de commande selon la revendication 11, dans lequel le premier réseau de communication sans fil est une ligne sans fil privée, et le second réseau de communication sans fil est une ligne sans fil d'un opérateur de télécommunications mobiles ou une ligne sans fil publique.

13. Procédé de commande selon la revendication 11 ou 12, comprenant en outre une étape de traitement consistant à effectuer, sur des données provenant du dispositif capteur (120), l'un quelconque d'un traitement de chiffrement, d'un traitement de mosaïque, d'un traitement de conversion en informations audio et d'un traitement de conversion en informations textuelles en fonction du réseau de communication sans fil sélectionné lors de l'étape de sélection, et à générer les données de transmission, ou comprenant en outre :
une étape de traitement consistant à effectuer l'un quelconque d'un traitement de chiffrement, d'un traitement de mosaïque, d'un traitement de conversion en informations audio et d'un traitement de conversion en informations textuelles sur des données provenant du dispositif capteur (120) avant l'étape de sélection et à générer les données de transmission, dans lequel
lors de l'étape de sélection, un réseau de communication sans fil pour transmettre les données de transmission est sélectionné sur la base des données de transmission générées lors de l'étape de traitement.

14. Programme de commande destiné à amener un ordinateur à exécuter un traitement inclus dans le procédé de commande selon l'une des revendications 11 à 13.
